Europäisches Patentamt

European Patent Office

Office européen des brevets

(11) Veröffentlichungsnummer: **0 378 118**
**A2**

(12) **EUROPÄISCHE PATENTANMELDUNG**

(21) Anmeldenummer: 90100177.6

(51) Int. Cl.⁵: **F16B 12/20**

(22) Anmeldetag: 05.01.90

(30) Priorität: 09.01.89 DE 8900182 U

(43) Veröffentlichungstag der Anmeldung:
18.07.90 Patentblatt 90/29

(84) Benannte Vertragsstaaten:
DE FR GB IT SE

(71) Anmelder: G & G BESCHLÄGE GMBH
Bondorfer Weg 28
D-7270 Naold(DE)

(72) Erfinder: Koch, Gerhard
Bondorfer Weg 28
D-7270 Nagold(DE)

(74) Vertreter: Hoefer, Theodor, Dipl.-Ing.
Kreuzstrasse 32
D-4800 Bielefeld 1(DE)

(54) **Möbelbeschlag.**

(57) Bei einem Beschlag als Drehbeschlag zum lösbaren Verbinden winklig, insbesondere rechtwinklig zueinanderstehender Wandungen wie Möbelwandungen mit einem in einer Wandung (11) einsetzbaren Anzugsbolzen (13) und einem in der anderen Wandung anzuordnenden Gehäuse (14) als Drehteil, wobei das Gehäuse (14) im Querschnitt C-förmig ausgebildet und ein über seine Mittelebene sich erstreckender Schlitz (17) miz zwei sich gegenüberliegenden, parallel verlaufenden exzentrischen Anzugsflächen (14c) für den Anzugsbolzen (13) vorgeshen ist, setzt sich ein dem Schlitz (17) benachbarter Steg (28) des Gehäuses (14) in einem inneren Steg (19) und einem äußeren Steg (20) fort, die zwischen sich eine materialsparende Aussparung (18) bilden.

Fig.3

EP 0 378 118 A2

## Möbelbeschlag

Die Erfindung bezieht sich auf einen Beschlag zum lösbaren Verbinden winklig, insbesondere rechtwinklig zueinander stehender Möbelwandungen o. dgl. mit einem in einer Wandung einsetzbaren Anzugsbolzen und einem in der anderen Wandung anzuordnenden Gehäuse als Drehteil. Dabei ist das Gehäuse im Querschnitt C-förmig ausgebildet. Ein über seine Mittelebene sich erstreckender Schlitz ist mit zwei sich gegenüberliegenden parallel verlaufenden exzentrischen Anzugsflächen für den Anzugsbolzen vorgesehen, die jeweils von außen nach innen sich in einer gedachten Mittelquerachse nähern.

Derartige bekannte Möbelbeschläge als Drehbeschläge mit Gehäuse und Anzugsbolzen sind verhältnismäßig schwer; sie erfordern beachtliches Material.

Aufgabe der Erfindung ist es, einen Beschlag der vorgenannten Gattung vorzusehen, der sich bei einfacher Herstellung als materialsparend im Rahmen einer Massenanfertigung zeigt und hohe Widerstandswerte gegen Verbiegen aufweist.

Gemäß der Erfindung wird diese Aufgabe bei einem Möbelbeschlag vorgenannter Gattung dadurch gelöst, daß ein in dem Schlitz benachbarter Steg des Gehäuses sich in einem inneren Steg und einem äußeren Steg fortsetzt, die zwischen sich eine materialsparende Aussparung bilden.

Durch eine derartige Aussparung im Steg des C-förmigen Gehäuse können trotz hoher Festigkeitswerte Werkstoffe am Gehäuse eingespart werden.

Bei einer bevorzugten Ausführungsform ist der innere Steg dünner als der äußere Steg ausgebildet. Dabei kann die Aussparung mit etwa parallelogrammförmigen Wandungen ausgestattet sein, wobei diese dreiseitig geschlossen ist und mit einer Öffnung nach außen sich zeigt.

Dabei kann in bevorzugter Weise der innere Steg nach außen zu geradflächig verlaufen, während der äußere Steg außenseitig gebogen und innenseitig ebenfalls nach außen zu geradlinig verlaufen kann.

Weitere Merkmale ergeben sich aus den Unteransprüchen.

Der Schutz erstreckt sich nicht nur auf die Einzelmerkmale, sondern auch auf deren Kombination.

Auf der Zeichnung ist ein Ausführungsbeispiel der Erfindung dargestellt. Es zeigt in

Fig. 1 einen Querschnitt durch eine rechtwinklige Verbindung von zwei Möbelwandungen mit eingesetztem Anzugsbolzen und Gahäuse als Drehkörper mit exzentrischen Anzugsflächen;

Fig. 2 eine Seitenansicht desselben Drehkörpers;

Fig. 3 einen Schnitt durch denselben Drehkörper gem. Schnittlinie III-III in Fig. 2, wobei gegenüber Fig. 2 der Drehkörper in einer den Anzugsbolzen noch nicht beaufschlagenden Stellung dargestellt ist.

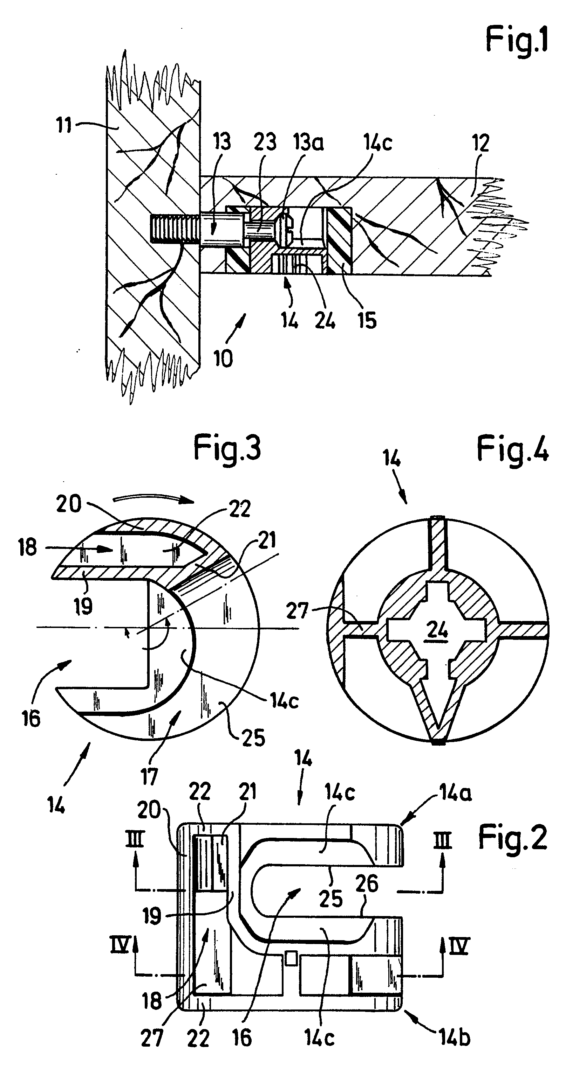

Fig-. 4 einen Schnitt durch denselben Drehkörper gemäß Schnittlinie IV - IV in Fig 2

Ein Beschlag (10) als Drehbeschlag zum lösbaren Verbinden winklig, insbesondere rechtwinklig zueinander stehenden Wandungen (11, 12) wie Möbelwandungen - beispielsweise eine senkrechte Seitenwandung (11) mit einem waagerechten Zwischenboden (12) - weist einen in der einen Wandung (11) eingesetzten Anzugsbolzen (13) und ein in der anderen Wandung (12) angeordnetes eingesetztes Gehäuse (14) als Drehteil mit exzenterförmiger Anzugsfläche (14 c) auf.

Dieses Gehäuse (14) als Rundkörper ist in eine Bohrung bzw. in eine Hülse (15) des Zwischenbodens (12) eingesetzt. Es besteht vorzugsweise aus Druckguß.

Dieses Gehäuse (14) hat (vgl. Fig. 2) im Querschnitt eine C-Form und ist zum Einstecken des Anzugsbolzens (13) in seiner Seitenwandung mit einer Eintrittsöffnung (16) für den Kopf (13 a) diese Anzugsbolzens (13) ausgestattet. Durch die C-Form des Gehäuses (14) bei einem in die Hülse (15) eingesetztem Zustand wird ein innenseitiger Schenkel (14 a) und eine nach außen gerichteter Schenkel (14 b) gebildet, der dicker gehalten ist als der innenseitige Schenkel (14 a).

Ein über fast die ganze Mittelebene dieses Gehäuses (14) sich erstreckender Schlitz (17) legt zwei sich gegenüberliegende parallel verlaufende exzentrische Anlageflächen (25, 26) frei, die jeweils von außen nach innen sich der gedachten Mittelquerachse nähern.

Nach dem Einschieben des Kopfes (13 a) des Anzugsbolzens (13) wird das Gehäuse (14) verdreht. Dabei fassen die beiden Anzugsflächen (14 a) als Spannflächen, die zunächst spannhakenförmig ausgebildet sind, hinter den Kopf (13 a). Durch die exzentrische Gestaltung der beiden Anzugsflächen (14 c) zieht sich der Anzugsbolzen (13) in das Gehäuse hinein, wobei die Verdrehbewegung einen Winkel $\alpha$ von mindestens 180°, vorzugsweise bis zu 210° beschreiben kann.

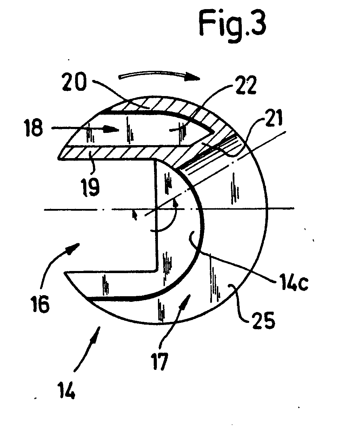

Das dem Schlitz (17) benachbarte Gehäuse (14) (die Gehäusewandung) ist gemäß der Erfindung verdickt und erreicht eine mittlere Aussparung (18), die der Materialersparnis dient. Der innenseitige Steg (19) ist vorzugsweise dünner als der nach außen gerichtete Steg (20), wobei die beiden parallel in Achsrichtung des Gehäuses (14) verlaufenden Stege (19, 20) durch einen in Verdrehrichtung (Anzugsrichtung) weisenden Steg (21) und einen mittleren Steg (27) (s. Fig. 4) verbunden sind (s. Fig. 3). Zusammen mit weiteren sich gehäusestirnseitig in einem Abstand gegenüberliegenden Stegen (22) wird so die vorbeschriebene Aussparung (18) gebildet, die nach außen vorzugsweise offen ist.

Der in dieses Gehäuse (14) mit seinem Kopf (13 a) eingeführte Anzugsbolzen (13) hat in bekannter Weise einen dem Kopf (13 a) gegenüberliegenden zylindrischen Teil, der beispielsweise in der Möbelwand (11) unmittelbar eingeschraubt oder in eine darin eingeschraubte Verstärkungshülse aus Metall (nicht dargestellt) eingesetzt sein kann.

Das kopfseitige Ende dieses Bolzens (13) ist zu einem im Durchmesser geringeren Führungsschaft (23) allmählich übergehend abgesetzt, der endseitig den als Schließkopf ausgebildeten Kopf (13 a) trägt.

Zum spielfreien Verbinden zweier Möbelwandungen (11, 12) ziehen die beiden exzenterförmigen Anzugsflächen (14 c) beim Drehen des Gehäuses (14) die entsprechende Anzugsfläche des Anzugsbolzens (13) unter geringer spezifischer Flächenpressung in das Gehäuse hinein. Zwischen Gehäuse (14) und Anzugsbolzen (13) wird eine gewisse Spannung erzeugt, die zur sicheren und dauerhaften Verbindung auch bei auftretenden Erschütterungen der beiden Möbelwände (11, 12) beiträgt, wobei zum Verdrehen des Gehäuses (14) dieses stirnseitig eine Aussparung (24) zum Einstecken eines Inbusschlüssels o. dgl. (nicht dargestellt) aufweist.

Einerseits ist der Beschlag durch hohe Festigkeit gekennzeichnet und andererseits durch ein leichtes Gewicht im Hinblick auf die erfindungsgemäße Aussparung (18) des vorzugsweise aus Druckguß hergestellten Gehäuses (14).

Der erfindungsgemäße Drehbeschlag (10) ist materialsparend im Rahmen einer Massenanfertigung billig herzustellen und zeigt hohe Widerstandswerte, so daß ein Verbiegen der Stege und der Schenkel nicht auftreten kann.

**Ansprüche**

1. Beschlag als Drehbeschlag zum lösbaren Verbinden winklig, insbesondere rechtwinklig zueinanderstehenden Wandungen wie Möbelwandungen mit einem in einer Wandung einsetzbaren Anzugsbolzen und einem in der anderen Wandung anzuordnenden Gehäuse als Drehteil, wobei das Gehäuse im Querschnitt C-förmig ausgebildet und ein über seine Mittelebene sich erstreckender Schlitz mit zwei sich gegenüberliegenden, parallel verlaufenden exzentrischen Anzugsflächen für den Anzugsbolzen vorgesehen ist, die jeweils von außen nach innen sich einer gedachten Mittelquerachse nähern, dadurch gekennzeichnet, daß ein dem Schlitz (17) benachbarter Steg (28) des Gehäuses (14) sich in einem inneren Steg (19) und einem äußeren Steg (20) fortsetzt, die zwischen sich eine materialsparende Aussparung (18) bilden.

2. Beschlag nach Anspruch 1, dadurch gekennzeichnet, daß der innere Steg (19) dünner als der äußere Steg (20) ausgebildet ist.

3. Beschlag nach Anspruch 1 oder 2, dadurch gekennzeichnet, daß die Aussparung (18) mit etwa parallelogrammförmigen Wandungen ausgestattet ist.

4. Beschlag nach einem der Ansprüche 1 bis 3, dadurch gekennzeichnet, daß die Aussparung (18) dreiseitig geschlossen mit einer Öffnung nach außen ausgebildet ist.

5. Beschlag nach einem der Ansprüche 1 bis 4, dadurch gekennzeichnet, daß der innenseitige Schenkel (14 a) des Gehäuses (10) dünner als der außenseitige Schenkel (14 b) ist.

6. Beschlag nach einem der Ansprüche 1 bis 5, dadurch gekennzeichnet, daß der innere Steg (19) nach außen zu geradflächig verläuft.

7. Beschlag nach einem der Ansprüche 1 bis 6, dadurch gekennzeichnet, daß der äußere Steg (20) außenseitig gebogen und innenseitig nach außen zu geradlinig verläuft.

8. Beschlag nach einem der Ansprüche 1 bis 7, dadurch gekennzeichnet, daß der innere und der äußere Steg (19, 20) mittels einer in Verdrehrichtung weisenden Steges (21) miteinander verbunden sind.

9. Beschlag nach einem der Ansprüche 1 bis 8, dadurch gekennzeichnet, daß der innere und der äußere Steg (19, 20) mittels eines weiteren mittleren Steges (27) miteinander verbunden sind.

10. Beschlag nach Anspruch 1, dadurch gekennzeichnet, daß der Schlitz sich mindestens über 180 $^{\circ}$, vorzugsweise bis 210 $^{\circ}$, im Gehäuse erstreckt.

11. Beschlag nach Anspruch 10, dadurch gekennzeichnet, daß der die Aussparung (22) nach innen abschließende Steg (21) den Schlitz (17) nach innen begrenzt.

Fig.1

Fig.3

Fig.4

Fig.2

## Fig.3